# EUROPEAN PATENT APPLICATION

(11) **EP 4 546 504 A1**
(43) Date of publication of application: **30.04.2025**
(21) Application number: 23206184.6
(22) Date of filing: 26.10.2023
(51) Int. Cl.: H01M 10/613, H01M 10/625, H01M 10/647, H01M 10/653, H01M 10/6551, H01M 10/6555, H01M 50/209, H01M 50/293

(54) **BATTERY SYSTEM WITH CELL SPACERS BETWEEN BATTERY CELLS AND A METHOD OF MANUFACTURING THEREOF**

(71) Applicant: Samsung SDI Co., Ltd., Yongin-si, Gyeonggi-do 17084 (KR)
(72) Inventor: Hadler, Bernhard, 8073 Feldkirchen bei Graz (AT); Aiello, Luigi, 8010 Graz (AT)
(74) Representative: Gulde & Partner

(57) **Abstract**

The present disclosure refers to a battery system (100). The battery system (100) includes a plurality of battery cells (10, 12) including a first battery cell (10) and a second battery cell (12) accommodated in a housing. A cell spacer (S) among a plurality of cell spacers is positioned between the first battery cell (10) and the second battery cell (12). The cell spacer (S) includes a first insulating layer (20), a second insulating layer (40) and a metal fin (30) between the first insulating layer (20) and the second insulating layer (40). A gap filler layer (50) includes a first surface (51) facing the plurality of battery cells (10, 12) and a second surface (52) facing away from the plurality of battery cells (10, 12), wherein the plurality of battery cells (10, 12) are in contact with the first surface (51) of the gap filler layer (50). In addition, a cooling plate (60) including a surface (62) contacting the second surface (52) of the gap filler layer (50). The metal fin (30) at least partially penetrates the gap filler layer (50) so that an end portion (32) of the metal fin (30) extends toward the cooling plate (60).

## Description

### Field of the Disclosure

The present disclosure relates to a battery system including cell spacers between battery cells. The present disclosure further includes a method of manufacturing a battery system including cell spacer between battery cells. Further, the disclosure deals with a vehicle including the battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery (EVB, or traction battery) is a battery used to power the propulsion of battery electric vehicles (BEVs). Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Rechargeable batteries may be used as a battery module formed of a plurality of battery cells coupled to each other in series and/or in parallel to provide a high energy density, such as for motor driving of a hybrid vehicle. For example, the battery module may be formed by interconnecting the electrode terminals of the plurality of unit battery cells in an arrangement or configuration depending on a desired amount of power and to realize a high-power rechargeable battery.

Battery modules can be constructed in either a block design or a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series for providing a desired voltage. The battery modules may include submodules with a plurality of stacked battery cells and each stack includes cells connected in parallel that are, in turn, connected in series (*XpYs*) or cells connected in series that are, in turn, connected in parallel (*XsYp*)*.*

Battery systems, according to the related art, despite any modular structure, usually include a battery housing that acts as enclosure to seal the battery system against the environment and provides structural protection of the battery system components. Housed battery systems are usually mounted as a whole into their application environment, such as an electric vehicle.

Exothermic decomposition of cell components may lead to a so-called thermal runaway. Generally, thermal runaway refers a process that is accelerated by increased temperature, in turn releasing energy that further increases temperature. Thermal runaway occurs in situations where an increase in temperature changes cell conditions in a way that causes further increase in temperature, often leading to a destructive result.

In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (for example, above 150°C) it can transit into a thermal runaway.

The initial heating may be caused by a local failure, such as a cell internal short circuit, heating from a defective electrical contact, a short circuit to a neighboring cell, etc. During the thermal runaway, a failed battery cell, (e.g., a battery cell that has a local failure) may reach a temperature exceeding 700°C. Further, large quantities of hot gas are ejected from inside the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes gas-pressure to increase inside the battery pack.

In battery systems, cell spacers are used to prevent a spread of thermal runaway across the battery cells of the battery system. Cell spacer technology introducing thermally insulating spacers between the battery cells establishes cell-to-cell thermal barriers. Thus, a critical overheating in one battery cell among the plurality of battery cells may be prevented from spreading to other battery cells due to the presence of the cell spacer therebetween. Thus a thermal runaway event may more likely remain localized.

In addition, when a battery cell undergoes thermal runaway or develops heat due to any other considerable reason, the critical heat should be removed to prevent damage to components of the battery system and to prevent heat spread. Therefore, heat needs to be locally dissipated to cool the battery cell for stopping thermal runaway. For this purpose, a cooling plate and a thermally conductive gap filler wherein heat can be thermally conducted through the gap filler to the cooling plate which acts as a heat sink to receive at least a part of the heat.

However, despite of that the gap filler has some thermal conductivity properties, the thermal conduction from the battery cell to the cooling plate via the gap filler remains limited. Therefore, in particular cases, heat flow to the cooling plate may not be sufficiently fast to stop or prevent spreading of thermal runaway in the battery system.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided. The battery system includes a plurality of battery cells including a first battery cell and a second battery cell accommodated in a housing. The battery system includes a cell spacer positioned between the first battery cell and the second battery cell. The cell spacer includes a first insulating layer, a second insulating layer and a metal fin between the first insulating layer and the second insulating layer. Further, the battery system includes a gap filler layer including a first surface facing the plurality of battery cells and a second surface facing away from the plurality of battery cells. In addition, the plurality of battery cells are in contact with the first surface of the gap filler layer. The battery system further includes a cooling plate including a surface contacting the second surface of the gap filler layer. The metal fin at least partially penetrates the gap filler layer so that an end portion of the metal fin extends toward the cooling plate.

According to another aspect of the present disclosure, a method of manufacturing a battery system provided. The method further includes a step of pressing the metal fin onto the gap filler layer until the metal fin at least partially penetrates the gap filler layer so that the end portion of the metal fin extends toward the cooling plate.

Yet another aspect of the present disclosure refers to vehicle including the above battery system.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic side view of a battery system according to an embodiment,
- Fig. 2: illustrates a method of manufacturing a battery system according to an embodiment, and
- Fig. 3: illustrates a schematic side view of a battery system according to another embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system includes a plurality of battery cells. The plurality of battery cells includes a first battery cell and a second battery cell. The battery cells are accommodated in a battery housing. The battery system includes a plurality of cell spacers including a cell spacer positioned between the first battery cell and the second battery cell. The cell spacer includes a first (thermally) insulating layer, a second (thermally) insulating layer and a metal fin between the first insulating layer and the second insulating layer. Further, the battery system includes a gap filler including a first surface facing the plurality of battery cells and a second surface facing away from the plurality of battery cells. The battery cells are in contact with the first surface of the gap filler. The battery system further includes a cooling plate including a surface being in contact with the second surface of the gap filler layer. Further, the metal fin of the cell spacer at least partially penetrates or is immersed in the gap filler so that an end portion of the metal fin extends toward the cooling plate.

A gap filler layer may be in other words a gap filler. The gap filler may be thermally conductive cured liquid material. The gap filler may be a thermally conductive paste material. The gap filler may be in other words a thermal interface material layer (TIM). The metal fin may be metal plate. Metal has a relatively high thermal conductivity. The surfaces may also be referred to as contact surfaces here and in the following. Further, metal generally has relatively high rigidity. The material of the metal may be aluminum or copper but the invention is not restricted thereto. The thermal conductivity of the metal may be higher than the thermal conductivity of the gap filler material. That is, even though the gap filler material has a thermal conductance, the heat conductivity is lower than compared to the heat conductivity of the metal material of the metal fin. The cell spacer since having the first and second insulating layer acts as thermal barrier between the first and second battery cell. The insulating layers may cover, i.e., and/or contact a side surface of the corresponding battery cell so that the metal fin is thermally (and electrically) insulated from the battery cells. Thus, the cell spacer may act as cell-to-cell thermal barrier. That the metal fin of the cell spacer at least partially penetrates the gap filler so that an end portion of the metal fin extends toward the cooling plate may mean in other words that the metal fin at least approaches the cooling plate by remaining above the cooling plate. To term penetrate may mean in other words that of being at least partially immersed or at least partially embedded in the gap filler layer.

The advantage arising from the present invention is that the metal fin due to the at least partial penetration of the gap filler layer provides a heat conducting path directed to the cooling plate to rapidly dissipate excess heat along the metal to the cooling plate (acting as heat sink). Since the thermal conductivity of the gap filler layer has limitations, heat can therefore be thermally conducted through the end portion of the metal fin to the cooling plate in faster manner than compared to when the heat has to propagate through the bulk (thickness) of the gap filler layer. Thus, the cell spacer does not only act as thermal barrier between the (first and second) battery cells but also provides a fast heat dissipation path to rapidly removed heat to the cooling plate without affecting the thermal cell-to-cell insulation. Therefore, with the features as mentioned above, a stoppage or prevention of a thermal runaway is more likely achieved by the provided battery system.

According to an embodiment, the end portion of the metal fin protrudes with respect to the first and second insulating layers in direction toward the cooling plate. Since the end portion of the metal fin protrudes from the surfaces of the insulating layers, the at least partial penetration of the gap filler layer can be performed easily by a step of pressing only the protruding end portion of the metal fin on the gap filler layer using the rigidity of the metal to cause the at least partial penetration. Thus, part of the gap filler layer can be displaced by the metal fin.

According to an embodiment, the first insulating layer and the second insulating layer respectively include surfaces directing toward the cooling plate, wherein the surfaces of the first insulating layer and the second insulating layer contact the first surface of the gap filler layer without penetrating the gap filler layer. Thus, since the end portion of the metal fin protrudes from the insulating layers, heat cannot only be conducted in the main direction of the metal fin but also side conduction paths are provided from the (free) sides of the protruding end portion toward the cooling plate. This may also help to distribute the heat flow from the metal fin to the coolant plate to maintain a heat gradient.

According to one embodiment, the end portion of the metal fin penetrates by at least 50 %, preferably 70 %, more preferably 90 % of a thickness of the gap filler layer in direction toward the cooling plate. When the end portion of the metal fin penetrates the gap filler layer by more than 50%, a substantial increase of heat conductance since heat only has to penetrate a fraction of less than half of the gap filler layer thickness to reach the cooling plate. Thus, a rapid heat conduction link is provided. The end portion of the metal fin penetrates the gap filler layer by more than 90% of the thickness of the gap filler layer. Then, the metal fin is at least nearly in (direct) contact with the cooling plate so that heat conductance to the cooling plate is maximized.

According to one embodiment, a first distance of the end portion of the metal fin to the surface of the cooling plate is less than 0.5 mm, preferably less than 0.3 mm, more preferably 0.1 mm. Thus, when the first distance of the end portion of the metal fin to the surface of the cooling plate is less than 0.5 mm, the heat conductance to the cooling plate is increased. In particular, when the first distance of the end portion of the metal fin to the surface of the cooling plate is less than 0.1 mm, the heat conductance to the cooling plate is substantially maximized.

According to one embodiment, the first insulating layer and/or the second insulating layer include silica aerogel. Silica aerogel may be solid foam including silica having high porosity. Thus, the aerogel is light weight together with low heat conductance. Thus, an efficient and light-weight thermal cell-to-cell insulation can be provided.

According to one embodiment the end portion of the metal fin includes side surfaces which contact side surfaces of the gap filler layer. Thus, since the end portion of the metal fin contacts the side surface of the gap filler layer, heat cannot only be conducted in the main direction of the metal fin but also propagate in side conduction paths provided by the side contacts.

According to one embodiment, the end portion of the metal fin is spatially separated from the surface of the cooling plate through a separation layer of the gap filler layer. The separation layer may be obtained as a residual layer in result of producing the tight contact due to pressing the metal fin on the gap filler layer. This residual separation layer is small compared the height of the gap filler layer so that heat can easily be conducted across the separation layer from the metal fin to the cooling plate.

According to another embodiment, the first insulating layer and/or the second insulating layer include mica. Mica is a mineral with good thermal insulation properties. Thus, an efficient thermal cell-to-cell insulation can be provided is provided.

According to one embodiment, a first distance of the end portion of the metal fin to the cooling plate is shorter than a second distance of the end portion to the first or second battery cell. This relation ensures relatively high cell-to-cell thermal insulation due to providing a relatively high second distance (thickness of thermal insulation layer) while allowing enhanced heat dissipation toward the cooling plate due to having a relatively small first distance.

According to one embodiment, the plurality of battery cells are prismatic battery cells. The geometry of prismatic cells is particularly suitable for stacking the battery cells. Thus, the cell spacer technology is useful for the prismatic battery cells.

According to an embodiment, the end portion of the metal fin directly contacts with the surface of the cooling plate. Due to the direct contact, the heat conductance along the metal fine toward the cooling plate is maximized. This configuration may be achieved by processing the gap filler layer differently (e.g. etching) other than the pressing step where in the latter an entire removal (residual separation layer) may not be feasible.

According to another aspect of the disclosure, a method of manufacturing a battery system according to one of the above embodiments is provided. The method includes the step of pressing the metal fin onto the gap filler layer until the metal fin at least partially penetrates the gap filler layer so that the end portion of the metal fin extends toward the cooling plate. Thus, a relatively fast and simple assembly process is provided. The rigidity of the metal fin compared to the gap filler material is used to provide an at least partial penetration. A portion of the gap filler material is thereby displaced in response to the process of pressing. Thus, the gap filler material makes space for the end portion of the metal fin. The penetration due to the pressing may also support the metal fin in the gap filler layer.

According to one embodiment, the method includes the step of providing the cell spacer prior to the step of pressing by connecting the first insulating layer and the second insulating layer with the metal fin such that end portion of the metal fin protrude with respect to the end portions of the first and second insulating layers. Thus, the rigid end portion of the metal fin can be used to displace the gap filler layer material so to provide the close contact.

According to one embodiment, the step of pressing is performed such that end portions of the first insulating layer and the second insulating layer contact the first surface of the gap filler layer without penetrating the gap filler layer. This may provide a tight connection and allows maximum heat conductance to the cooling plate. Additionally, the insulating layers do not interfere in the pressing step as this pressing is then only performed by the end portion of the metal fin.

Further method steps can be derived from the above features of the battery system.

According to another aspect of the disclosure, a vehicle includes the battery system according to one of the above embodiments.

### Specific Embodiments

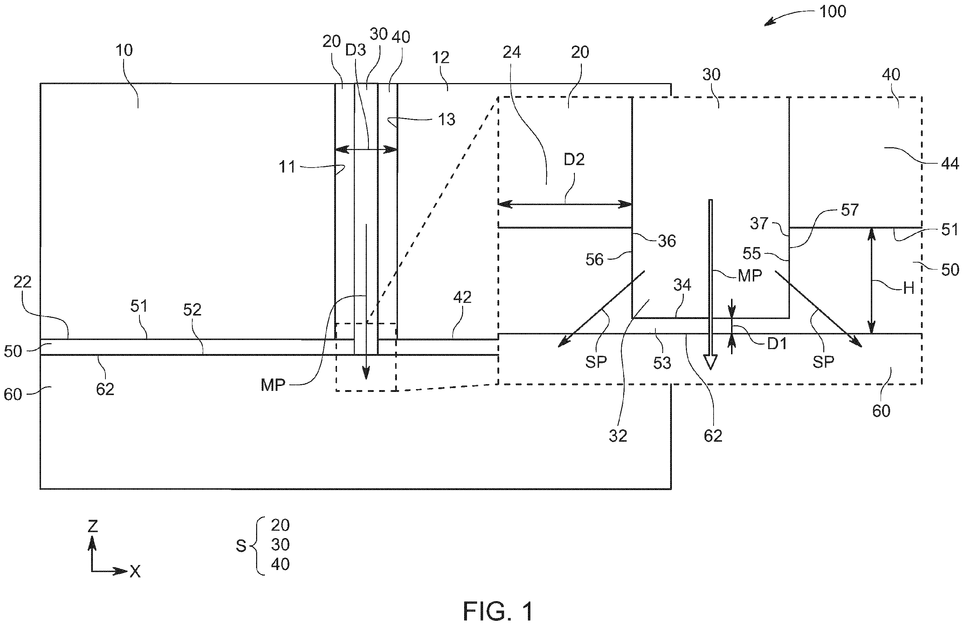

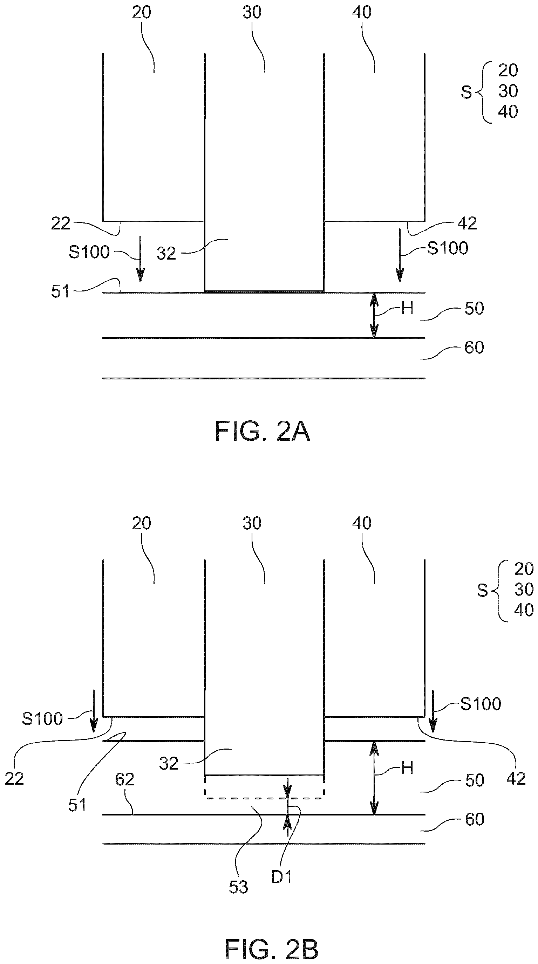

Fig. 1 is a schematic side view of a battery system 100 according to an embodiment including an enlarged part of the image. Figs. 2 (a) and 2 (b) illustrate a method of manufacturing a battery system 100 according to an embodiment.

The battery system 100 includes a plurality of battery cells 10, 12. The battery cells 10, 12 are accommodated in a housing (not explicitly shown). The number of battery cells 10, 12 is not restricted to a particular number. The battery cells 10, 12 may be arranged in a predefined manner to be efficiently packed. The battery cells 10, 12 or subsets thereof may be electrically interconnected with each other to provide a common output or input.

Since the present invention relates to an interface between two battery cells 10, 12, a first battery cell 10 and a second battery cell 12 are shown in Fig. 1. However, the battery cells 10, 12 may be part of a large set of battery cells 10, 12. Further, various compartments may be provided to support the plurality of battery cells 10, 12 including the first battery cell 10 and the second battery cell 12. In the following, the interface between the first battery cell 10 and the second battery cell 12 will be described in more detail.

The battery system 100 includes a plurality of cell spacers S. According to Fig. 1, a cell spacer S is positioned between the first battery cell 10 and the second battery cell 12. The cell spacer S forms a thermal barrier between the first battery cell 10 and the second battery cell 12 to prevent heat to propagate between the first battery cell 10 and the second battery cell 12. In the present case, the plurality of battery cells 10, 12 are prismatic battery cells 10, 12 for which the cell spacers S are provided. However, the invention is not restricted thereto and the battery cells 10, 12 can have a different form.

According the present disclosure, the cell spacer S includes a first insulating layer (or a first thermally layer) 20, a second layer (or a second thermally layer) 40 and a metal fin 30. The metal fin 30 is positioned between the first insulating layer 20 and the second insulating layer 40 as indicated in Fig. 1. Thus, the metal fin 30 is sandwiched by the first insulating layer 20 and the second insulating layer 40.

The first insulating layer 20 may extend along a side surface 11 of the first battery cell 10. The second insulating layer 40 may extend along a side surface 13 of the second battery cell 12.

Thus, due to the first insulating layer 20 and the second insulating layer 40, thermal conductance between the first battery cell 10 and the second battery cell 12 is reduced. In case that one among the first battery cell 10 and the second battery cell 12 undergoes thermal runaway or is overheated, excessive heat cannot easily propagate to the other one among the first battery cell 10 and the second battery cell 12 so that a cell-to-cell thermal insulation is provided despite of the presence of the metal fin 30.

For to prevent cell-to-cell heat propagation, the first insulating layer 20 and/or the second insulating layer 40 may include silica aerogel. Silica aerogel has good insulating properties and is light weight due to high porosity. In different embodiments, the first insulating layer 20 and/or the second insulating layer 40 may include mica. Mica has excellent heat insulation properties to effectively prevent cell-to-cell heat propagation.

The battery system 100 further includes a gap filler layer 50. The battery cells 10, 12 may be disposed on the gap filler layer 50 and contact the gap filler layer 50 as indicated in Fig. 1. Thus, the battery cells 10, 12 are supported by the gap filler layer 50. The gap filler layer 50 includes a first surface 51 facing the plurality of battery cells 10, 12. In addition, the gap filler layer 50 includes a second surface 52 facing away from the plurality of battery cells 10, 12. As further indicated in Fig. 1, the plurality of battery cells 10, 12 may be in contact with the first surface 51 of the gap filler layer 50.

The battery system 100 further includes a cooling plate 60 disposed below the gap filler layer 50. In detail, a surface 62 of the cooling plate 60 contacts the second surface 52 of the gap filler layer 50. The gap filler layer 50 having limited thermally conductive properties may conduct heat according to a certain level to the cooling plate 60.

As indicated in Fig. 1 and in particular in the enlarged part of the figure, the metal fin 30 of the cell spacer S at least partially penetrates the gap filler layer 50. The metal fin 30 penetrates the gap filler layer 50 so that an end portion 32 of the metal fin 30 extends toward the cooling plate 60. Thus, the metal fin 30 is closer to the cooling plate 60 than the first surface 51 so that the travel path of heat through the gap filler layer 50 is reduced and heat can easily be conducted along the end portion 32 of the metal fin 30 to the cooling plate 60.

Thus, due to the at least partial penetration of the metal fin 30 through the gap filler layer 50 a main heat conducting path MP along the metal fin 30 toward the cooling plate 60 is provided for rapid heat dissipation via the metal fin 30 (and the end portion 32) to the cooling plate 60 (acting as heat sink), see the bold arrow in Fig. 1.

In more detail, since the thermal conductivity of the gap filler layer 50 is limited, a thermal conduction to the cooling plate 60 is facilitated via the end portion 32 of the metal fin 30 to the cooling plate 60 compared to when heat has to propagate through the bulk (thickness) of the gap filler layer 50. Therefore, the cell spacer S does not only act as thermal barrier between the (first and second) battery cells 10, 12 due to the insulating layers 20, 40 but also provides a fast heat dissipation path (main heat conducting path MP) for heat to be rapidly dissipated to the cooling plate 60. Thus, stoppage of a thermal runaway is more likely achieved due to the presence of the metal fin 30 at least partially penetrating the gap filler layer 50.

As can be recognized in Fig. 1, the cell spacer S has a geometrical structure as described in the following. The first insulating layer 20 and the second insulating layer 40 respectively include surfaces 22, 42. These surfaces 22, 42 are directed toward the gap filler layer 50 (or the cooling plate 60). The end portion 32 of the metal fin 30 protrudes with respect to end portions 24, 44 of the first and second insulating layers 20, 40 in direction toward the cooling plate 60. This allows the metal fin 30 to extend to the cooling plate 60 through the gap filler layer 50. Further, the surfaces 22, 42 of the first insulating layer 20 and the second insulating layer 40 contact the first surface 51 of the gap filler layer 50 without penetrating the gap filler layer 50. This is best illustrated in the enlarged part of Fig. 1. Thus, since the end portion 32 of the metal fin 30 protrudes from the insulating layers 20, 40, heat cannot only be conducted along the main heat conducting path MP but also side heat conduction paths SP are formed from the (free) sides of the protruding end portion 32 as indicated in Fig. 1 which may help to more quickly distribute and absorb heat over the cooling plate 60.

In the example of Fig. 1, the end portion 32 of the metal fin 30 penetrates by 90 % of a thickness H of the gap filler layer 50. In other embodiments, the end portion 32 penetrate the thickness H of the gap filler layer 50 at least by 50 %, preferably at least by 70 %, more preferably at least by 90 % of a thickness H of the gap filler layer 50 in direction toward the cooling plate 60. When the end portion 32 of the metal fin 30 penetrates the gap filler layer 50 by more than 50%, a substantial increase of heat conductance is achieved. When the end portion 32 of the metal fin 30 penetrates the gap filler layer 50 by more than 90% as indicated in Fig. 1, the metal fin 30 is at least nearly in (direct) contact with the cooling plate 60 so that heat conductance to the cooling plate 60 is maximized.

The distance of the end portion 32 of the metal fin 30 to the cooling plate 60 is referred to as a first distance D1. The first distance D1 a bottom surface 34 of the end portion 32 of the metal fin 30 to the surface 62 of the cooling plate 60 in the embodiment of Fig. 1 is 0.1 mm at total thickness H of 1.0 mm of the gap filler layer 50. In other embodiments, the first distance D1 of the end portion 32 of the metal fin 30 to the surface 62 of the cooling plate 60 is at least less than 0.5 mm, preferably at least less than 0.3 mm, more preferably at least less than 0.1 mm. These short first distances D1 between the cooling plate 60 and the metal fin 30 may allow rapid heat dissipation through the end portion 32 of the metal fin 30.

In the embodiment of Fig. 1, the end portion 32 of the metal fin 30 is spatially separated from the surface 62 of the cooling plate 60 through a separation layer 53 of the gap filler layer 50. This can be the result of production tolerance during a method of pressing the metal fin 30 on the cooling plate 60. However, since the separation layer 53 may be thin (having the first distance D1) compared to the total thickness H, heat can be easily conducted from the metal fin 30 to the cooling plate 60 across the separation layer 53 to the cooling plate 60.

As illustrated in Fig. 1, the side surfaces 36, 37 of the end portion 32 of the metal fin 30 contact side surfaces 56, 57 of the gap filler layer 50. Thus, heat can be as well conducted as side conductive path SP via side surfaces toward the cooling plate 60, so that heat may be better distributed over the cooling plate 60 and thus quicker absorbed. A larger amount of heat may be dissipated by the cooling plate 60 for a given time. As indicated in the enlarged part of Fig. 1, the portion of the gap filler layer 50 displaced by the end portion 32 of the metal fin 30 between the separation layer 53 and the first surface 51 of the gap filler layer 50 may form a recess 55. This recess 55 and the contact between the side surfaces 36, 37 of the end portion 32 of the metal fin 30 and the side surfaces 56, 57 may be reached due to pressing of the metal fin 30 on the gap filler layer 50 to partially penetrate the gap filler layer 50, see also Fig. 2 for detailed thereto.

As shown in Fig. 1, the first distance D1 from the end portion 32 of the metal fin 30 to the cooling plate 60 is shorter than a second distance D2 from the end portion 32 to the first or second battery cell 10, 12. The second distance D2 may refer to the thickness of the first/second insulated layers 20/40. Thus, having relatively high second distance D2, thermal conductance across the battery cells is efficiently prevented while, due to a relatively low first distance D1, the heat can be easily dissipated via the metal fin 30 to the cooling plate 60. A third distance D3 referring to the thickness of the cell spacer S may be in the mm-scale, for example 2 to 6 mm or 3 to 5 mm or 3.5 to 4.5 mm including 4 mm. These distances may ensure good cell-to-cell insulation without occupying too much space.

Fig. 2 shows a method of manufacturing a battery system 100 according to an embodiment of the present disclosure. The battery system 100 may refer to the battery system 100 as disclosed above according to the various embodiments as described with respect to Fig. 1. Thus, a repetitive description is avoided and the above disclosed parts are incorporated by reference.

As can be seen in Fig. 2 (a) as indicated by the arrows therein, the method includes a pressing S100 of the metal fin 30 onto the gap filler layer 50. The pressing is performed until the metal fin 30 at least partially penetrates the gap filler layer 50. This final state is for example shown in previous Fig. 1, where and end portion 32 is immersed in the gap filler layer 50. A pressing tool (here not shown) may be used to apply a pressing force to the metal fin 30 so to press or push the metal fin 30 onto the gap filler layer 50 in direction toward the cooling plate 60. Fig. 2 (a) indicates a state in which the metal fin 30 contacts the gap filler layer 50 to provide an initial contact from which the pressing on the gap filler layer 50 may be initiated.

As can be seen Fig. 2 (b), an intermediate pressing state is provided in which the metal fin 30 is pressed to push the metal fin 30 in the gap filler layer 50 toward the cooling plate 60, as indicated by the arrows. Thus, part of the material of the gap filler layer 50 is displaced to give space to the end portion 32 of the metal fin 30. The rigid property of the metal fin 30 compared to the gap filler layer 50 is hereby used.

The pressing is stopped if the end portion 32 of the metal fin 30 extends toward the cooling plate 60 such that the metal fin 30 reaches a desired penetration depth or a maximum penetration depth in the gap filler layer 50. The final penetrated state is illustrated in Fig. 2 (b) by the dashed line which refers to the state as disclosed in Fig. 1. The final state involves here in this example the (thin) separation layer 53 in which the end portion 32 of the metal fin 30 is separated from the cooling plate 60 by the first distance D1. The pressing of the metal fin 30 is an easy manufacturing process without involving advanced processing tools.

As indicated in Fig. 2 (a), the cell spacer S is provided prior to the step of pressing S100, i.e., the first insulating layer 20, the second insulating layer 40 with the metal fin 30 are connected together such that the end portion 32 of the metal fin 30 protrudes with respect to the first and second insulating layers 20, 40 toward the cooling plate 60. Thus, end portion 32 of the metal fin 30, which is protruding, can be used to penetrate the gap filler layer 50. This is facilitated due to a rigid property of metal with compared to the gap filler layer 50. The step of pressing S100 as described above may involve that the battery cells 10, 12 with spacers S are pressed together on the gap filler layer 50 to reach the final state as indicated for example by the dashed line in Fig. 2 (b).

The step of pressing S100 may be performed such that surfaces 22, 42 of the first insulating layer 20 and the second insulating layer 40 contact the first surface 51 of the gap filler layer 50 without penetrating the gap filler layer 50. Thus, only the end portion 32 of the metal fin 30 penetrates the gap filler layer 50 as explained above. For the additional features as disclosed with respect in Fig. 1 can as well be implemented in the method for which it is referred to the above description of Fig. 1.

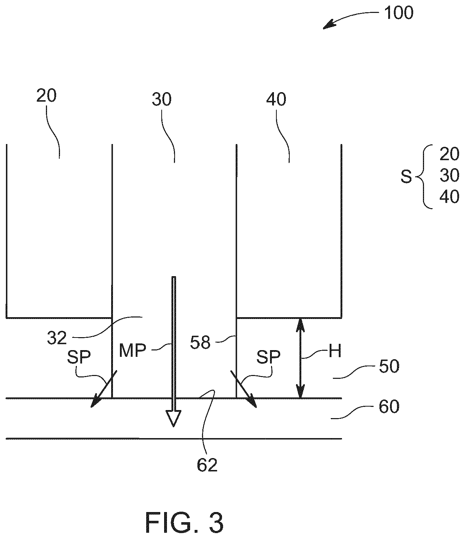

Fig. 3 illustrates a schematic side view cross section of a battery system 100 according to another embodiment. In this embodiment only the differences with respect to the embodiment of Fig. 1 are described. For features in common, it is referred to the description with respect to Fig. 1.

In this embodiment, the end portion 32 of the metal fin 30 directly contacts the cooling plate 60. Thus, the gap filler layer 50 includes an opening 58 without gap filler material. Thus, heat can be rapidly dissipated to the cooling plate 60.

In summary, a battery system and a method of manufacturing thereof is provided in which the metal fin 30 of the cell spacer S due to at least partial penetration of the gap filler layer 50 provides a heat conducting path directed to the cooling plate 60 to rapidly dissipate heat along the metal fin 30 to the cooling plate 60. Thus, since the thermal conductivity of the gap filler layer 50 is rather limited, heat can be easily thermally conducted via the end portion 32 of the metal fin 30 to the cooling plate 60 in faster manner than compared to when heat has to propagate through the bulk (thickness) of the gap filler layer 50.

Thus, the cell spacer S does not only act as cell-to-cell thermal barrier between the (first and second) battery cells 10, 12 due to the insulating layers 20, 40 but also provides a fast heat dissipation path for heat to be rapidly removed to the cooling plate 60 without affecting thermal cell-to-cell insulation. Therefore, with the features of the battery system 100, a stoppage or prevention of a thermal runaway is more likely achieved. In addition, a fast manufacturing process is disclosed which allows to reach the battery system in manner that can be easily implemented without requiring involved production tools.

### Reference signs

- 10: first battery cell
- 11: side surface
- 12: second battery cell
- 13: side surface

- S: cell spacer

- 20: first insulating layer
- 22: (contact) surface

- 30: metal fin
- 32: end portion
- 34: bottom surface
- 36: side surface
- 37: side surface

- 40: second insulating layer
- 42: (contact) surface

- 50: gap filler layer
- 51: first (contact) surface
- 52: second (contact) surface
- 53: separation layer
- 55: recess
- 56: side surface
- 57: side surface
- 58: opening

- 60: cooling plate
- 62: (contact) surface

- H: thickness
- D1: first distance
- D2: second distance
- D3: third distance

- 100: battery system

- S100: pressing

## Claims

1. A battery system (100), comprising:
a plurality of battery cells (10, 12) comprising a first battery cell (10) and a second battery cell (12) accommodated in a housing;
a cell spacer (S) positioned between the first battery cell (10) and the second battery cell (12);
a gap filler layer (50) comprising a first surface (51) facing the plurality of battery cells (10, 12) and a second surface (52) facing away from the plurality of battery cells (10, 12), wherein the plurality of battery cells (10, 12) are in contact with the first surface (51) of the gap filler layer (50); and
a cooling plate (60) comprising a surface (62) contacting the second surface (52) of the gap filler layer (50);
wherein the cell spacer (S) comprises a first insulating layer (20), a second insulating layer (40) and a metal fin (30) between the first insulating layer (20) and the second insulating layer (40); and
wherein the metal fin (30) at least partially penetrates the gap filler layer (50) so that an end portion (32) of the metal fin (30) extends toward the cooling plate (60).

2. The battery system (100) according to claim 1, wherein the end portion (32) of the metal fin (30) protrudes with respect to the first and second insulating layers (20, 40) in direction toward the cooling plate (60).

3. The battery system (100) according to claim 2, wherein the first insulating layer (20) and the second insulating layer (40) respectively comprise surfaces (22, 42) directing toward the cooling plate (60), wherein the surfaces (22, 42) of the first insulating layer (20) and the second insulating layer (40) contact the first surface (51) of the gap filler layer (50) without penetrating the gap filler layer (50).

4. The battery system (100) according to one of the claims 1 to 3, wherein the end portion (32) of the metal fin (30) penetrates by at least 50 %, preferably 70 %, more preferably 90 % of a thickness (H) of the gap filler layer (50) in direction toward the cooling plate (60).

5. The battery system (100) according to one of the preceding claims 1 to 4, wherein a first distance (D1) of the end portion (32) of the metal fin (30) to the surface (62) of the cooling plate (60) is less than 0.5 mm, preferably less than 0.3 mm, more preferably 0.1 mm.

6. The battery system (100) according to one of the preceding claims 1 to 5 of wherein the first distance (D1) of the end portion (32) of the metal fin (30) to the cooling plate (60) is shorter than a second distance (D2) of the end portion (32) to the first or second battery cell (10, 12).

7. The battery system (100) according to one of the preceding claims 1 to 6, wherein the first insulating layer (20) and/or the second insulating layer (40) comprise silica aerogel.

8. The battery system (100) according to one of the preceding claims 1 to 7, wherein the end portion (32) of the metal fin (30) comprises side surfaces (36, 37) which contact side surfaces (56, 57) of the gap filler layer (50).

9. The battery system (100) according to one of the preceding claims 1 to 8, wherein the end portion (32) of the metal fin (30) is spatially separated from the surface (62) of the cooling plate (60) through a separation layer (53) of the gap filler layer (50).

10. The battery system (100) according to one of the preceding claims 1 to 9, wherein the plurality of battery cells (10, 12) are prismatic battery cells.

11. The battery system (100) according to one of the preceding claims 1 to 10, wherein the first insulating layer (20) and/or the second insulating layer (40) comprise silica aerogel.

12. A method of manufacturing a battery system (100) according to one of the claims 1 to 11, the method comprising the step of:
pressing (S100) the metal fin (30) onto the gap filler layer (50) until the metal fin (30) at least partially penetrates the gap filler layer (50) so that the end portion (32) of the metal fin (30) extends toward the cooling plate (60).

13. The method of manufacturing according to claim 12, comprising the step of providing (S100) the cell spacer (S) prior to the step of pressing (S100) by connecting the first insulating layer (20) and the second insulating layer (40) with the metal fin (30) such that the end portion (32) of the metal fin (30) protrudes with respect to the first and second insulating layers (20, 40).

14. The method of manufacturing according to claim 13, wherein the step of pressing (S100) is performed such that end portions (24, 44) of the first insulating layer (20) and the second insulating layer (40) contact the first surface (51) of the gap filler layer (50) without penetrating the gap filler layer (50).

15. A vehicle comprising the battery system (100) according to any one of the preceding claims 1 to 11.

## Amended claims

### Amended claims in accordance with Rule 137(2) EPC.

1. A battery system (100), comprising:
a plurality of battery cells (10, 12) comprising a first battery cell (10) and a second battery cell (12) accommodated in a housing;
a cell spacer (S) positioned between the first battery cell (10) and the second battery cell (12);
a gap filler layer (50) comprising a first surface (51) facing the plurality of battery cells (10, 12) and a second surface (52) facing away from the plurality of battery cells (10, 12);
a cooling plate (60) comprising a surface (62) contacting the second surface (52) of the gap filler layer (50);
wherein the cell spacer (S) comprises a first thermally insulating layer (20), a second thermally insulating layer (40) and a metal fin (30) between the first thermally insulating layer (20) and the second thermally insulating layer (40);
characterized,
the plurality of battery cells (10, 12) are in contact with the first surface (51) of the gap filler layer (50), and
wherein the metal fin (30) at least partially penetrates the gap filler layer (50) so that an end portion (32) of the metal fin (30) extends toward the cooling plate (60).

2. The battery system (100) according to claim 1, wherein the end portion (32) of the metal fin (30) protrudes with respect to the first and second thermally insulating layers (20, 40) in direction toward the cooling plate (60).

3. The battery system (100) according to claim 2, wherein the first thermally insulating layer (20) and the second thermally insulating layer (40) respectively comprise surfaces (22, 42) directing toward the cooling plate (60), wherein the surfaces (22, 42) of the first thermally insulating layer (20) and the second thermally insulating layer (40) contact the first surface (51) of the gap filler layer (50) without penetrating the gap filler layer (50).

4. The battery system (100) according to one of the claims 1 to 3, wherein the end portion (32) of the metal fin (30) penetrates by at least 50 %, preferably 70 %, more preferably 90 % of a thickness (H) of the gap filler layer (50) in direction toward the cooling plate (60).

5. The battery system (100) according to one of the preceding claims 1 to 4, wherein a first distance (D1) of the end portion (32) of the metal fin (30) to the surface (62) of the cooling plate (60) is less than 0.5 mm, preferably less than 0.3 mm, more preferably 0.1 mm.

6. The battery system (100) according to one of the preceding claims 1 to 5 of wherein the first distance (D1) of the end portion (32) of the metal fin (30) to the cooling plate (60) is shorter than a second distance (D2) being a thickness of the first or second thermally insulating layer (20, 40).

7. The battery system (100) according to one of the preceding claims 1 to 6, wherein the first thermally insulating layer (20) and/or the second thermally insulating layer (40) comprise silica aerogel.

8. The battery system (100) according to one of the preceding claims 1 to 7, wherein the end portion (32) of the metal fin (30) comprises side surfaces (36, 37) which contact side surfaces (56, 57) of the gap filler layer (50).

9. The battery system (100) according to one of the preceding claims 1 to 8, wherein the end portion (32) of the metal fin (30) is spatially separated from the surface (62) of the cooling plate (60) through a separation layer (53) of the gap filler layer (50).

10. The battery system (100) according to one of the preceding claims 1 to 9, wherein the plurality of battery cells (10, 12) are prismatic battery cells.

11. The battery system (100) according to one of the preceding claims 1 to 10, wherein the first thermally insulating layer (20) and/or the second thermally insulating layer (40) comprise mica.

12. A method of manufacturing a battery system (100) according to one of the claims 1 to 11, the method comprising the step of:
pressing (S100) the metal fin (30) onto the gap filler layer (50) until the metal fin (30) at least partially penetrates the gap filler layer (50) so that the end portion (32) of the metal fin (30) extends toward the cooling plate (60).

13. The method of manufacturing according to claim 12, comprising the step of providing (S100) the cell spacer (S) prior to the step of pressing (S100) by connecting the first thermally insulating layer (20) and the second thermally insulating layer (40) with the metal fin (30) such that the end portion (32) of the metal fin (30) protrudes with respect to the first and second thermally insulating layers (20, 40).

14. The method of manufacturing according to claim 13, wherein the step of pressing (S100) is performed such that end portions (24, 44) of the first thermally insulating layer (20) and the second thermally insulating layer (40) contact the first surface (51) of the gap filler layer (50) without penetrating the gap filler layer (50).

15. A vehicle comprising the battery system (100) according to any one of the preceding claims 1 to 11.
